# EUROPÄISCHE PATENTANMELDUNG

(11) **EP 1 179 793 A1**
(43) Veröffentlichungstag der Anmeldung: **13.02.2002**
(21) Anmeldenummer: 00117096.8
(22) Anmeldetag: 09.08.2000
(51) Int. Cl.: G06F 17/60

(54) **Portal für Finanzdienstleister**

(71) Anmelder: Indatex GmbH, 82319 Starnberg (DE)
(72) Erfinder: Stehle, Klaus c/o Agamus Cons. Unternberat. GmbH, 82319 Starnberg (DE); Altomare, Pierro c/o Agamus Con.Untnb.GmbH, 82319 Starnberg (DE)
(74) Vertreter: Rupp, Christian, Dipl.Phys.

(57) **Zusammenfassung**

Ein Portal (1) ermöglicht den elektronischen Geschäftsverkehr zwischen freien Vermittlern (3, 4) und angeschlossenen Finanzdienstleistern, d.h. beispielsweise Terminals (2) von Versicherungen etc. Durch eine Formatkonvertierung (18) durch das Portal (1) und eine Datenübertragung über das Internet (10) können sämtliche Daten, die für die Anbahnung, Beauftragung und Erbringung einer Finanzdienstleistung, beispielsweise von Versicherungen relevant sind, elektronisch abgewickelt werden. Damit kann auf eine papierbasierte manuelle Verarbeitung von Daten weitgehend verzichtet werden.

## Beschreibung

Die vorliegende Erfindung bezieht sich auf ein Verfahren zur elektronischen Datenübermittlung im Bereich Finanzdienstleistung, auf Software-Programme zur Implementierung eines solchen Verfahrens sowie auf ein System zur elektronischen Datenübermittlung im Bereich der Vermittlung von Finanzdienstleistungen.

Der Hintergrund der vorliegenden Erfindung ist das Gebiet der (elektronischen) Vermittlung und Erbringung von Finanzdienstleistungen. Typische Finanzdienstleistungen werden von Versicherungen, Banken, Aktienhändlern, Fonds-Verwaltungsgesellschaften, Leasingfirmen, Bauspar-Gesellschaften, etc. angeboten.

Insbesondere im Bereich der versicherungsbezogenen Finanzdienstleistungen gibt es verschiedene Vertriebswege zur Vermittlung dieser Finanzdienstleistungen von dem eigentlichen Finanzdienstleistungs-Unternehmen zum Endkunden. Einer dieser Vertriebswege, der im Zuge einer Liberalisierung des Versicherungswesens an Bedeutung gewonnen hat, sind sogenannte freie Vermittler (Makler, Mehrfachagenturen, Vertriebe). Ein solcher Vermittler kann einem Endkunden Finanzdienstleistungen mehrerer verschiedener Finanzdienstleister (Versicherungen) anbieten und vermitteln. Typischerweise hat ein freier Vermittler bis zu 30 verschiedene Versicherungsgesellschaften als Partner, deren Finanzdienstleistungen er anbieten kann.

Neben diesem Vertriebsweg des freien Vermittlers gibt es auch noch den Ausschließlichkeitsagenten, der nur die Finanzdienstleistungen eines bestimmten Finanzdienstleisters (Versicherung) anbietet. Indessen ist der Marktanteil dieses Vertriebswegs von eher sinkender Bedeutung.

Selbstverständlich kommt es zwischen freien Vermittlern und den verschiedenen Versicherungen bei der Vermittlung und der Durchführung der Finanzdienstleistung zu einem voluminösen Austausch an Daten, wobei dieser Austausch eigentlich elektronisch ausgeführt werden sollte. Indessen ist zu bedenken, daß einerseits die Versicherungen üblicherweise proprietäre Verwaltungssysteme verwenden, d.h. Softwareinstallationen, die nicht individuell erstellt und somit weitgehend uneinheitlich sind. Andererseits gibt es für freie Vermittler verschiedene Vermittler-Verwaltungssoftware, beispielsweise zur Bestandsverwaltung des freien Vermittlers. Auch diese verschiedenen Typen an Vermittler-Verwaltungssoftware weisen untereinander Unterschiede auf und sind keineswegs vereinheitlicht. Festzuhalten ist somit, daß zur Zeit keine einheitliche elektronische Kommunikation zwischen Versicherungsgesellschaften und freien Vermittlern stattfindet.

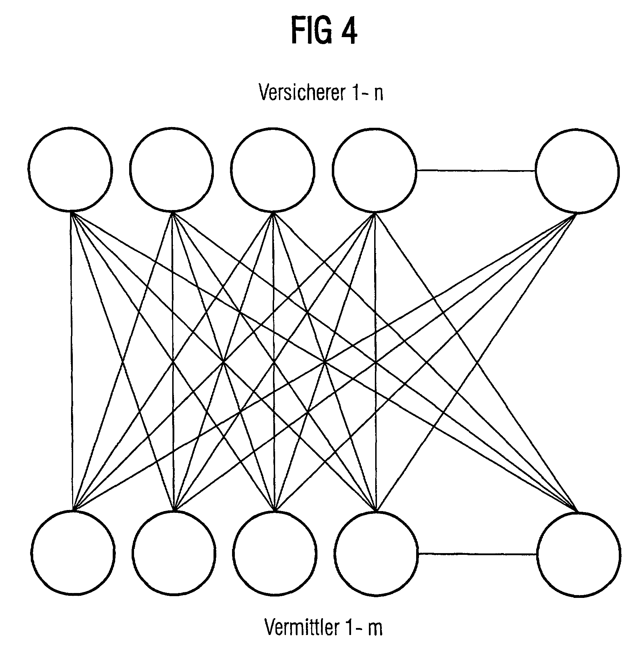

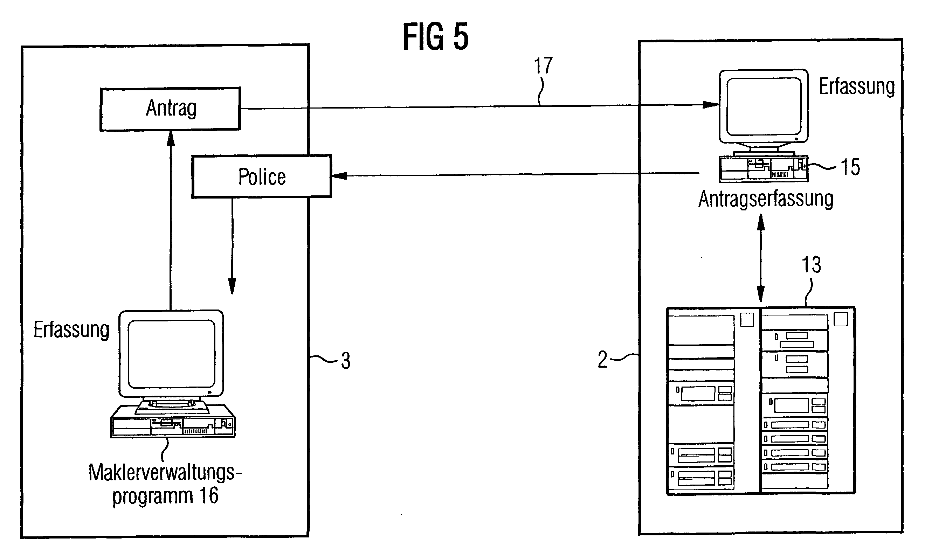

Wie unter Bezugnahme auf Figuren 4 und 5 der anliegenden Zeichnungen nunmehr erläutert werden wird, ist die Situation auf dem heutigen Versicherungsmarkt so, daß zwischen dem Versicherer und dem freien Vermittler der Austausch von Informationen im wesentlichen auf Grundlage papierbasierter, manueller Verarbeitung erfolgt.

Figur 4 zeigt insbesondere, daß freie Vermittler, die jeweils eine Großzahl an Versicherungsgesellschaften gegenüber dem Endkunden anbieten, für eine nahezu beliebig große Anzahl an Kommunikationswegen sorgen.

Anhand von Figur 5 soll nunmehr die papierbasierte manuelle Verarbeitung gemäß dem Stand der Technik erläutert werden. Wenn ein Antrag auf eine Versicherung gestellt werden soll, erfaßt der freie Vermittler 3 in seinem Vermittler-Verwaltungsprogramm 16 die entsprechenden Daten. Der Antrag wird parallel dazu manuelle erfasst und in Papierform (Hardcopy) 17 zu der Versicherungsgesellschaft 1 übersandt. Dort wird in einem weiteren manuellen Eingabeschritt der Antrag in Papierform von dem freien Vermittler 3 in das Verwaltungsprogramm (proprietäre Software) 13 der Versicherungsgesellschaft 2 eingegeben. Dies erfolgt mittels eines entsprechenden Arbeitsplatz-Rechners 15. Schließlich wird die ausgestellte Police schriftlich an den Vermittler 3 übersandt, der dieser relevante Daten entnimmt und wiederum händisch in sein Vermittler-Verwaltungsprogramm 16 eingibt.

Mit hohem personellen und zeitlichen Aufwand werden somit auf beiden Seiten, d.h. sowohl seitens des freien Vermittlers wie auch seitens der Versicherungsgesellschaft, Formulare beschafft, bevorratet, aktualisiert, ausgefüllt und versandt. Auf der jeweils anderen Seite vom freien Vermittler und Versicherungsgesellschaft werden dann die Formulare entgegengenommen, verteilt, inhaltlich geprüft und organisatorisch bearbeitet. Dazu kommt noch jeweils die datentechnische Erfassung des so eingeleiteten und abgeschlossenen Prozesses auf beiden Seiten. Diese papierbasierte manuelle Bearbeitung hat nachteilige Folgen sowohl für den freien Vermittler wie auch für die Versicherungsgesellschaft. Bei den Hauptgeschäftsprozessen Auftragsbearbeitung, Bestandsbearbeitung, Policierung, Provisions-/Courtageberechnung und Schadenregulierung führt diese Technik nämlich zu Problemen im Leistungserstellungsprozess, die sich durch folgende Parameter ausdrücken lassen:
- niedrige Prozessqualität aufgrund fehlerhafter Dateneingabe,
- hohe Fehler- und Reklamationsquoten,
- lange Durchlaufzeiten, etc.

Beim Dokumenten- und Informationsmanagement bestehen bei dieser papierbasierten, manuellen Technik Nachteile bezüglich der Bevorratung, der Druckkosten und dem postalischen Versand der Formulare, Dokumente und sonstigen schriftlichen Dokumentation. Daraus resultieren mangelnde Kundenzufriedenheit und hohe Kosten im Leistungserstellungsprozess. Zusammengefaßt sind die Gründe für diese Nachteile also, daß keine standardisierten Datenformate im Bereich des Vertriebswegs Mehrfachagentur vorliegen, diese für Informationssysteme von Versicherungsgesellschaften inkompatibel sind und die Datenverarbeitungs-Landschaft sowohl bei den Versicherungsgesellschaften wie auch bei den freien Vermittlern (Vermittler-Verwaltungsprogramme) heterogen ist. Daraus resultiert, wie bereits oben festgestellt, daß freier Vermittler und Versicherungsgesellschaft auf elektronischem Weg (mit der Ausnahme von spezifischen 1:1 Verbindungen ) nicht miteinander kommunizieren können.

Ausgehend von dem genannten Stand der Technik ist es Aufgabe der vorliegenden Erfindung, eine Technik bereitzustellen, die es Finanzdienstleistungs-Unternehmen, insbesondere Versicherungsgesellschaften, und freien Vermittlern (Mehrfachagenturen) ermöglicht, auf elektronischem Wege alle für die Anbahnung, Vermittlung und/oder Durchführung der entsprechenden Finanzdienstleistung notwendigen Daten zu übermitteln, auch wenn seitens der freien Vermittler und/oder der Finanzdienstleistungsunternehmen unterschiedliche Verwaltungsprogramme verwendet werden. Dabei sind in vorteilhafter Weise keine Veränderungen von internen Prozessen der Vermittler oder Finanzdienstleister nötig.

Wenn im folgenden von "Versicherungen" die Rede ist, dienen diese als ein anschauliches Beispiel für Finanzdienstleister im allgemeinen und sollen keinerlei Beschränkung hinsichtlich der Art der Finanzdienstleistung darstellen.

Die genannte Aufgabe wird gemäß der vorliegenden Erfindung durch die Merkmale der unabhängigen Ansprüche gelöst. Die abhängigen Ansprüche bilden den zentralen Gedanken der Erfindung in besonders vorteilhafter Weise weiter.

Die Erfindung ermöglicht also eine elektronische Kommunikation zwischen den Finanzdienstleistungs-Unternehmen und den freien Vermittlern, ohne daß zwangsläufig die Soft- und Hardware auf beiden Seiten vereinheitlicht werden muß. Dennoch sind die Daten zwischen den bei der Anbahnung, Vermittlung und/oder der Erbringung der Finanzdienstleistung beteiligten Parteien ohne mehrfache manuelle Erfassung und ohne Papierarbeit austauschbar.

Gemäß einem ersten Aspekt der vorliegenden Erfindung ist ein Verfahren zur elektronischen Datenübermittlung von wenigstens einem Vermittlerterminal zu einem von mehreren Terminals von Finanzdienstleistungs-Unternehmen mittels eines Datennetzes vorgesehen. Die Vermittlerterminals vermitteln dabei Finanzdienstleistungen von verschiedenen Finanzdienstleistungs-Unternehmen gegenüber Endkunden. Zuerst werden dabei in das Vermittlerterminal Daten eingegeben, die für eine Finanzdienstleistung relevant sind. Diese Daten werden dann von dem Vermittlerterminal zu einem von dem Vermittlerterminal und dem Terminal der Finanzdienstleistungs-Unternehmen unabhängigen Portal übermittelt. Ein Portal in diesem Sinne ist eine Datennetz-Anwendung und insbesondere eine Internet-Anwendung, die auf einem Server des Datennetzes (z.B. Internet) implementiert ist und vorgegebenen und/oder beliebigen Benutzern des Datennetzes einen Zugriff zur Vermittlung von Informationen aus einem gegebenen und/oder unbeschränktem Themenkreis ermöglicht.

Schließlich werden die eingegebenen Daten von dem Portal in das Verwaltungsprogramm des Terminals unter Anpassung an das von dem Verwaltungsprogramm des Terminals erforderliche Format übertragen. Auch dies erfolgt über ein Datennetz (z.B. Internet).

Die in das Vermittlerterminal eingegebenen Daten können automatisch durch eine Konverteranwendung aus dem Verwaltungsprogramm des Vermittlerterminals ausgelesen werden, um dann ggf. um weitere relevante Daten ergänzt in einer standardisierten Form zu dem Portal übertragen zu werden. Die Konverteranwendung kann dabei gleichzeitig auch eine Plausibilisierungsprüfung durchführen.

Gemäß einem weiteren Aspekt der vorliegenden Erfindung ist ein Verfahren zur elektronischen Datenübermittlung von einem von mehreren Terminals von Finanzdienstleistungs-Unternehmen zu wenigstens einem Vermittlerterminal mittels eines Datennetzes vorgesehen. Dabei vermitteln die Vermittlerterminals jeweils Leistungen von verschiedenen Finanzdienstleistungs-Unternehmen gegenüber Endkunden. Dabei werden Daten, die für eine Finanzdienstleistung relevant sind, in das Verwaltungsprogramm eines Terminals des Finanzdienstleistungs-Unternehmens eingegeben. Die eingegebenen Daten werden zu einem von dem Vermittlerterminal und den Terminals der/des Finanzdienstleistungs-Unternehmens unabhängigen Portal übertragen. Schließlich werden die eingegebenen Daten von dem (z.B. Internet)-Portal zu dem Verwaltungsprogramm des Vermittlerterminals unter Anpassung an das von dem Verwaltungsprogramm des Vermittlerterminals erforderliche Format übertragen.

Dabei können die Daten von dem Verwaltungsprogramm des Terminals in einem standardisierten Format zu dem Portal übertragen werden.

Das Vermittler-Verwaltungsprogramm kann auf dem Vermittlerterminal selbst und/oder auf dem Portal installiert sein, wobei in letzerem Fall das Vermittlerterminal mittels des Datennetzes (Internet) auf das Verwaltungsprogramm und die von ihm verarbeiteten Daten auf dem Portal zugreifen kann.

Falls bei einer Datenübertragung zwischen einem Vermittlerterminal und einem Terminal eines Finanzdienstleistungs-Unternehmens festgestellt wird, daß beim Übertragungsadressaten bereits ein älterer Datensatz gleichen Inhalts vorliegt, werden nicht sämtliche Daten, sondern nur geänderte Datensätze übertragen und beim Adressaten überschrieben.

An einem der Terminals eingegebene Daten können jeweils durch das Portal in ein standardisiertes Format und von diesem wiederum in ein dem jeweiligen Ausgabeterminal angepaßtes Format umgesetzt werden. Alternativ können die Daten in einem standardisierten Format in ein Verwaltungsprogramm eines Vermittlerterminals eingegeben werden, was besonders einfach ist, wenn die Vermittler-Verwaltungssoftware vereinheitlicht werden kann.

Die Finanzdienstleistungs-Unternehmen können beispielsweise Versicherungsgesellschaften sein.

In diesem Fall können auch von wenigstens einem Terminal einer Versicherungsgesellschaft zu wenigstens einem Vermittlerterminal über das Datennetz und das Portal Versicherungs-Tarifinformationen und/oder Vertragsinformationen übertragen werden.

Gemäß einem weiteren Aspekt der vorliegenden Erfindung ist ein Software-Programm vorgesehen, das in dem in einen Speicher eines Terminals eines Finanzdienstleistungs-Unternehmens, eines Datennetz-Portals und/oder eines Vermittlerterminals geladenen Zustand die Ausführung eines Verfahrens wie zuvor angesprochen ermöglicht.

Das Software-Programm kann ein auf einem Vermittlerterminal installiertes Vermittler-Verwaltungsprogramm und/oder ein auf einem Datennetz-Portal installiertes Vermittler-Verwaltungsprogramm sein.

Gemäß einem noch weiteren Aspekt der vorliegenden Erfindung ist ein System zur elektronischen Datenübermittlung zwischen einem Vermittlerterminal und Terminals mehrerer Finanzdienstleistungs-Unternehmen über ein Datennetz vorgesehen. Das System weist dabei wenigstens ein Vermittlerterminal zur Ein- und Ausgabe von Daten, die für eine Finanzdienstleistung relevant sind, durch einen Vermittler auf, der Finanzdienstleistungen verschiedener Finanzdienstleistungs-Unternehmen vermittelt. Die Daten, die für die Finanzdienstleistungen relevant sind, können für die Beauftragung und/oder die Durchführung der Finanzdienstleistung relevant sein. Weiterhin sind mehrere, jeweils einem der Finanzdienstleistungs-Unternehmen zugeordnete Terminals zur Ein- und Ausgabe der für die Finanzdienstleistung relevanten Daten vorgesehen, wobei diese Terminals bspw. durch Benutzer des jeweiligen Finanzdienstleistungs-Unternehmen bedient werden. Schließlich ist ein Portal zur Übermittlung der Daten zwischen dem wenigstens einem Vermittlerterminal und dem Terminal der Finanzdienstleistungs-Unternehmen unter Anpassung des jeweiligen Eingabeformats an das jeweilige Ausgabeformat vorgesehen, wobei die Datenübermittlung über ein Datennetz erfolgt.

Die Finanzdienstleistungs-Unternehmen können Versicherungsgesellschaften sein. In diesem Fall können versicherungsrelevante Daten wie Antragsdaten, Bestandsdaten, Policedaten, Provisions-/Courtagedaten und/oder Schadendaten übermittelt werden.

Weitere Vorteile, Merkmale und Eigenschaften der vorliegenden Erfindung werden aus der folgenden detaillierten Beschreibung eines Ausführungsbeispiels näher ersichtlich, wobei auf die Figuren der begleitenden Zeichnungen Bezug genommen wird.
Figur 1 zeigt eine Übersicht über ein System für den elektronischen Datenverkehr zwischen Finanzdienstleistungs-Unternehmen und freien Vermittlern gemäß der vorliegenden Erfindung,
Figur 2 zeigt eine Ansicht gemäß einem Szenario, bei dem die Vermittler-Verwaltungssoftware auf einem Portal gespeichert bzw. implementiert ist,
Figur 3 zeigt ein Szenario, bei dem die Vermittler-Verwaltungssoftware bei dem Terminal des freien Vermittlers selbst installiert ist,
Figur 4 zeigt eine schematische Darstellung der Kommunikationswege zwischen verschiedenen Versicherungsgesellschaften und freien Vermittlern, und
Figur 5 zeigt die papierbasierte manuelle Datenübermittlung zwischen freien Vermittlern und Versicherungsgesellschaften gemäß dem Stand der Technik.

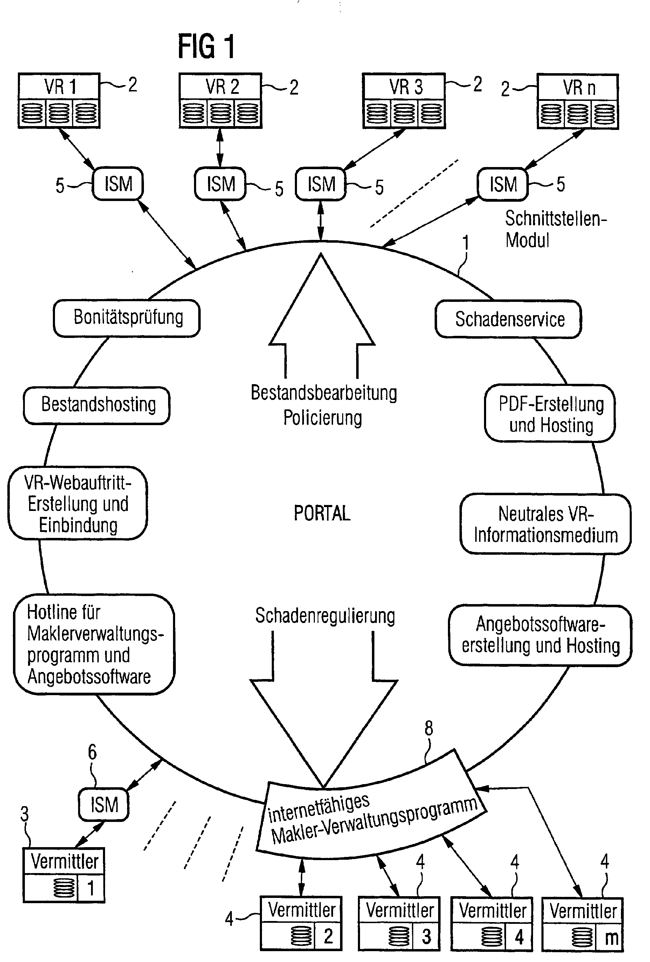

Bezugnehmend auf Figur 1 soll nunmehr zuerst eine Übersicht über das erfindungsgemäße System verschafft werden. Mit dem Bezugszeichen 2 sind dabei verschiedene Finanzdienstleister (Versicherungen) VR1, VR2 ... VR(n) bezeichnet. Diese sind jeweils mittels eines Schnittstellenmoduls (ISM) 5 mit einem Portal 1 verbunden, wobei also für jeden eingebundenen Finanzdienstleister ein Schnittstellenmodul 5 vorgesehen ist. Die verschiedenen Schnittstellenmodule 5 sind dabei entsprechend der Software des zugeordneten Finanzdienstleisters individuell konfiguriert und unterschieden sich daher in der Regel entsprechend der Software des zugeordneten Finanzdienstleisters untereinander.

Das physikalische Übertragungsmedium kann dabei ein Datennetz wie beispielsweise das Internet sein. Das Portal 1 hat insbesondere eine elektronische Übermittlungsfunktion unter Formatanpassung für die im Versicherungswesen wichtigsten Vorgänge wie Antragserstellung, Bestandsbearbeitung, Policierung, Provisions-/Courtageberechnung und Schadenregulierung. Darüber hinaus kann über das Portal 1 ein Daten- und Informationsaustausch bezüglich folgender Dienstleistungen ausgeführt werden:
- Bonitätsprüfung,
- Bestandshosting,
- Erstellung und Einbindung eines Webauftritts für Versicherungen,
- Bereitstellung einer Hotline (Informations-Telefonleitung) für ein Vermittler-Verwaltungsprogramm und Angebotssoftware,
- eine Angebotssoftware-Erstellung und Hosting,
- eine Funktion als neutrales Versicherungs-Informationsmedium,
- die Erstellung und das Hosting von Formularen in einem standardisierten Format (beispielsweise dem PDF-Format), und
- Schadenservice

Das Portal 1 ist weiterhin mittels Schnittstellenmodulen 6 mit freien Vermittlern 3 verbunden. Für jeden freien Vermittler 3 ist dabei ein auf das Vermittler-Verwaltungsprogramm in seinem Terminal zugeschnittenes Schnittstellenmodul 6 vorgesehen.

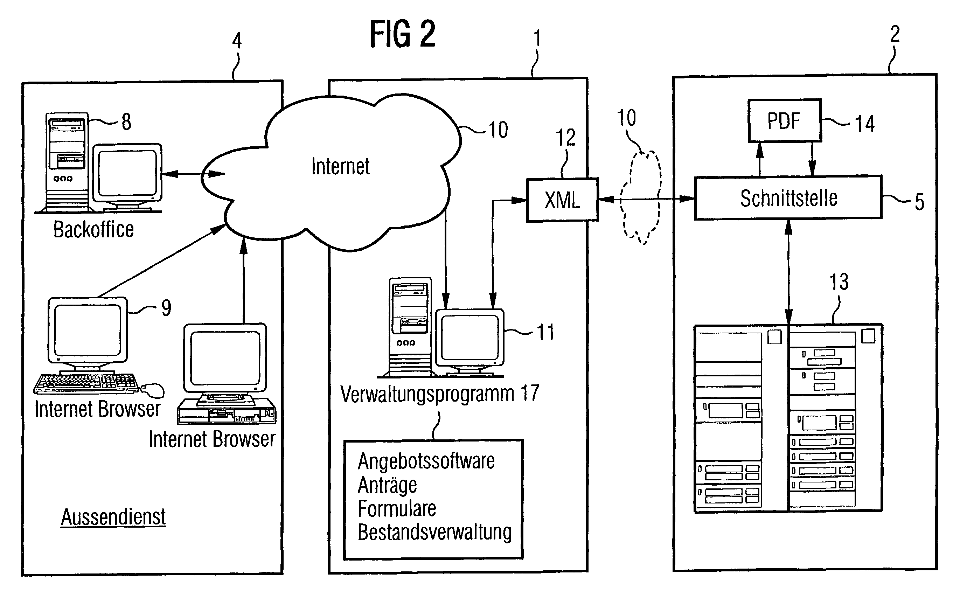

Für den Fall, daß Vermittler 4 ohne eigenes, auf ihrem Terminal installiertes Vermittler-Verwaltungsprogramm, arbeiten möchten, kann das Portal 1 ein intemetfähiges Vermittler-Verwaltungsprogramm 8 für diese Vermittler 4 aufweisen, wobei die Vermittler 4 über ein Datennetz (Internet) auf dieses internetfähige Vermittler-Verwaltungsprogramm 8 zugreifen können. Dies wird später im Detail unter Bezugnahme auf Figur 2 erläutert.

Figur 2 zeigt ein Szenario für Vermittlerterminals 4, die selbst kein eigenes Vermittler-Verwaltungsprogramm installiert aufweisen. Das Vermittlerterminal 4 kann in diesem Fall beispielsweise das Hauptbüro (Back Office) 8, d.h. den entsprechenden festinstallierten Rechner sowie für eine Verwendung im Außendienst mobile Rechner (Laptop- oder Notebook-Computer) 9 aufweisen. Diese, dem Vermittlerterminal 4 zugeordneten Rechner 8 und 9 stehen mittels des Internets 10 mit dem Portal 1 in Verbindung. Auf einem Server 11, der an das Internet 10 angebunden ist, ist neben der eigentlichen portalbezogenen Software auch ein Vermittler-Verwaltungsprogramm 17 abgelegt. Dieses auf dem Server 11 des Portals 1 abgelegte Vermittler-Verwaltungsprogramm 17 erledigt bspw. die Aspekte Angebotssoftware, Anträge, Formulare, Bestandsverwaltung, etc. Dazu greifen die entsprechenden angeschlossenen Vermittlerterminals 4 über das Internet 10 auf dieses Vermittler-Verwaltungsprogramm 17 zu.

Andererseits steht das Portal 1 über eine XML-Schnittstelle 12 mit einer Schnittstelle 5 in Verbindung. Die Schnittstelle 5 ist dabei dem Terminal 2 der Finanzdienstleistungsgesellschaft (Versicherung) zugeordnet. Das Terminal 2 der Finanzdienstleistungsgesellschaft weist darüber hinaus einen Server 13 auf. Die Schnittstelle 5 des Terminals 2 kann beispielsweise jedes durch den Server 13 des Terminals 2 eingegebene Dokument in ein standardisiertes Format und insbesondere das PDF-Format 14 umsetzen. Das PDF-Format 14 kann insbesondere durch das im Handel erhältliche Programm Acrobat der Firma Adobe erstellt und verwaltet werden.

In dem Szenario von Figur 2 weisen Dateneingaben im Bereich das Vermittlerterminals 4 automatisch ein einheitliches Format auf, da sie auf ein einheitliches Vermittler-Verwaltungsprogramm 17 auf dem Portal 1 zugreifen. Die Schnittstelle 5 des Terminals 2 der Finanzdienstleistungs-Unternehmen sorgt dann dafür, daß die Daten im Standardformat von dem Portal 1 in die Verwaltungssoftware des Terminals 2, die in dem Server 13 installiert ist, entsprechend angepaßt gegebenenfalls unter Formatkonvertierung übertragen werden.

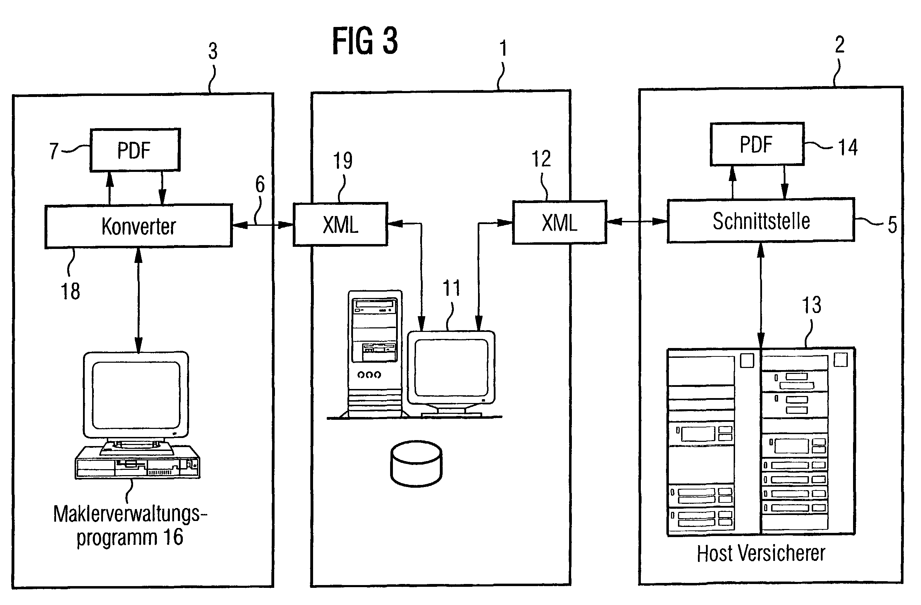

Figur 3 zeigt das Szenario, das ein Vermittler-Verwaltungsprogramm 16 auf dem Vermittlerterminal 3 selbst installiert ist. In diesem Fall wird auf das Vermittler-Verwaltungsprogramm 16 ein Konvertierungsprogramm 18 aufgesetzt, das mittels des Vermittler-Verwaltungsprogramms 16 eingegebene Daten in ein standardisiertes Format, wie beispielsweise das PDF-Format 7 umsetzt. Es erfolgt dann eine Datenübertragung von dem Konvertierungsmodul 18 mittels einer XML-Schnittstelle 19 zu dem Portal 1. In diesem Fall, bei dem das Vermittler-Verwaltungsprogramm 16 wie gesagt auf dem Vermittlerterminal 3 installiert ist, hat das Portal 1 im wesentlichen die Vermittlungsfunktion von einem der mehreren Vermittlerterminals 3 zu dem entsprechenden Terminal 2 der gewünschten Versicherungsgesellschaft. Die in das Vermittlerterminal 3 eingegebenen Daten können somit automatisch durch die Konverteranwendung aus dem Verwaltungsprogramm 16 des Vermittlerterminals 3 ausgelesen werden, um dann ggf. um weitere relevante Daten ergänzt in einer standardisierten Form und mittels eines Schnittstellenmoduls 6 zu dem Portal 1 übertragen zu werden.

Bei einer Datenübertragung von dem Terminal einer Versicherungsgesellschaft hin zu einem Vermittlerterminal 3 gibt es in dem Szenario gemäß Figur 3 mehrere Optionen. Einerseits können die standardisiert mittels des Portals 1 zu dem Vermittlerterminal 3 übertragenen Daten durch die dort installierte Konverteranwendung automatisch in das Vermittler-Verwaltungsprogramm des Vermittlerterminals 3 eingegeben werden. Alternativ kann die Konverteranwendung die Daten auf dem Vermittlerterminal 3 in einem standardisierten Format (z.B. dem PDF-Format) zur Ansicht und zum Ausdruck etc. bereitstellen, wobei ein ggf. gewünschter Datenübertrag in das Vermittler-Verwaltungsprogramm manuell erfolgen muß.

Selbstverständlich ist auch eine Mischform der Beispiele von Figur 2 und 3 möglich, d.h. ein Ausführungsbeispiel, bei dem das Vermittler-Verwaltungsprogramm auf dem Vermittlerterminal und dem Portal implementiert ist.

Durch die Erfindung können somit Daten, die für die Anbahnung und/oder Erbringung von Finanzdienstleistungen relevant sind, elektronisch zwischen einem freien Vermittler und einer Finanzdienstleistungs-Unternehmen ausgetauscht werden. Beispielsweise fallen solche Daten bei der Antragstellung, Policierung, Bestandsbearbeitung, Schadenabwicklung und Provisions-/Courtageabrechnung bei Versicherungen an.

Das Portal 1 stellt auch Formulare im PDF (Portable Document Format) bereit. Pro Vertragstyp gibt es einen Antrag, eine Police und ein Schadenformular bzw. die üblicherweise von Versicherungen/Vermittlern verwendeten Formulare und Dokumente (z.B. Deckungsnoten). Der Antrag und das Schadenformular können dabei eine eingebaute "Intelligenz" besitzen, d.h. das Portal 1 kann automatisch zumindest teilweise eine Plausibilisierungs-Prüfung der Daten ausführen, die in den Antrag und das Schadenformular durch das Vermittlerterminal 3 eingegeben wurden. Falls diese Plausibilisierungs-Prüfung einen möglichen (Eingabe-)Fehler erkennt, kann dies an dem Vermittlerterminal 3 angezeigt werden und/oder die weitere Eingabe von Daten solange verweigert werden, bis der mögliche Fehler beseitigt und/oder ausdrücklich als gewollte Eingabe bestätigt wurde. Die Plausibilisierungs-Prüfung kann bspw. im PDF-Format erfolgen.

Darüber hinaus kann der Antrag mit einem automatischen Tarifrechner ausgestattet werden. In diesem Fall besitzt das Portal auch Tarifinformationen von den angeschlossenen Versicherungsgesellschaften.

Für die freien Vermittler treten dabei hinsichtlich der Prozessqualität folgende Vorteile auf:
- Verkürzung der Durchlaufzeiten,
- Reduzierung der Fehlerquoten,
- Reduzierung der Reklamationsbearbeitung.

Weiterhin ist für die freien Vermittler eine effiziente Leistungserstellung aufgrund folgender Vorteile gewährleistet:
- niedrigere Policierungskosten,
- niedrigere Bestandsbearbeitungskosten,
- niedrigere Schadenregulierungskosten,
- Wegfall redundanter Dateneingabe.

Des weiteren ist durch den elektronischen Zugriff auf Formulare/Dokumente ein verbessertes Informations- und Dokumentenmanagement durch eine versicherungsübergreifend einheitliche Schnittstelle (Portal) gewährleistet. Darüber hinaus wird ein internetfähiges Vermittler-Verwaltungsprogramm für die freien Vermittler bereitgestellt.

Die Finanzdienstleistungsgesellschaften haben hinsichtlich der Prozessqualität die folgenden Vorteile:
- Verkürzung der Durchlaufzeiten,
- Reduzierung der Fehlerquoten,
- Reduzierung der Reklamationsbearbeitung.

Hinsichtlich der Leistungserstellung haben die Finanzdienstleister (Versicherungen) die folgenden Vorteile:
- niedrigere Policierungskosten,
- niedrigere Bestandsbearbeitungskosten,
- niedrigere Schadenregulierungskosten,
- Wegfall redundanter Dateneingabe.

Hinsichtlich eines effizienten Informations- und Dokumentenmanagements haben die Versicherungsgesellschaften folgenden Nutzen:
- Reduktion bzw. Wegfall von Porto- und Versandkosten,
- Reduktion bzw. Wegfall von Druck- und Bevorratungskosten,
- Reduktion bzw. Wegfall von Kopier- und Installationskosten bei Angebotssoftware,
- wirkungsvolles Informationsmanagement durch professionelle Internetpräsentation.

Die Konvertierungsanwendung 18 liest somit Daten, die in das Vermittler-Verwaltungsprogramm eingegeben wurden, aus und setzt sie in ein versicherungsspezifisches Formularformat um. Somit kann beispielsweise ein Versicherungsantrag durch einen freien Vermittler elektronisch ausgefüllt werden. Die Datenübermittlung kann dabei Online erfolgen, d.h. die im Vermittler-Verwaltungsprogramm eingegebenen Daten stehen unmittelbar auf dem Portal zur Verfügung und werden unverzüglich oder zu gegebener Zeit an die zugehörige Versicherungsgesellschaft übermittelt. Alternativ oder zusätzlich kann eine Offline-Eingabe erfolgen, d.h. beispielsweise im Außendienst werden die Daten in das Vermittler-Verwaltungsprogramm des tragbaren Computers des Außendienstmitarbeiters eingegeben. Sobald dann dieser Computer eine Online-Verbindung zu dem Portal 1 und somit auch zu der entsprechenden Versicherungsgesellschaft aufbauen kann, werden die Daten aus dem Vermittler-Verwaltungsprogramm ausgelesen und in das versicherungsspezifische Format überführt.

Für den Fall, daß das Vermittler-Verwaltungsprogramm auf dem Portal 1 installiert ist, benötigt das Vermittlerterminal noch eine Browserfunktion (ein Browser ist ein Anzeigeprogramm zum "Durchstöbern" des World Wide Web (WWW) im Internet. Ein Browserprogramm stellt dabei die WWW-Informationen anschaulich grafisch dar und ermöglichst das Anwählen verschiedener Dienste wie HTTP, XML, etc). Die eigentliche Bestandssoftware ist in diesem Fall auf dem Portal 1 abgelegt.

Grundsätzlich gilt bei der vorliegenden Erfindung, daß nur Änderungsdaten, aber nie gesamte Datensätze übertragen werden. Mit anderen Worten, für den Fall, daß beim Übertragungsadressaten bereits ein älterer Datensatz mit der gleichen Bedeutung vorliegt, werden nur die geänderten Daten unter Schonung der Netzwerk-Ressourcen übertragen und beim Übertragungsadressaten eingetragen bzw. überschrieben.

## Patentansprüche

1. Verfahren zur elektronischen Datenübermittlung von wenigstens einem Vermittlerterminal (3, 4) zu einem von mehreren Terminals (2) von Finanzdienstleistungs-Unternehmen mittels eines Datennetzes (10), wobei die Vermittlerterminals (3, 4) jeweils Leistungen von verschiedenen Finanzdienstleistungs-Unternehmen gegenüber Endkunden vermitteln,
wobei das Verfahren die folgenden Schritte aufweist:
- Eingabe von Daten, die für eine Finanzdienstleistung relevant sind, in das Vermittlerterminal (3, 4),
- Übertragen der eingegebenen Daten zu einem von dem Vermittlerterminal (3, 4) und dem Terminal (2) unabhängigen Portal (1), und
- Übertragen der eingegeben Daten von dem Portal (1) in das Verwaltungsprogramm des Terminals (2) unter Anpassung an das von dem Verwaltungsprogramm des Terminals (2) erforderliche Format.

2. Verfahren nach Anspruch 1,
**dadurch gekennzeichnet,**
**dass** in das Vermittlerterminal (3, 4) eingegeben Daten automatisch durch eine Konverteranwendung (18) ausgelesen werden und in einer standardisierten Form (7) zu dem Portal (1) übertragen werden.

3. Verfahren zur elektronischen Datenübermittlung von einem von mehreren Terminals (2) von Finanzdienstleistungs-Unternehmen zu wenigstens einem Vermittlerterminal (3, 4) mittels eines Datennetzes (10), wobei die Vermittlerterminals (3, 4) jeweils Leistungen von verschiedenen Finanz-Dienstleistungsunternehmen gegenüber Endkunden vermitteln,
wobei das Verfahren die folgenden Schritte aufweist:
- Eingabe von Daten, die für eine Finanzdienstleistung relevant sind, in das Verwaltungsprogramm eines Terminals (2) des Finanz-Dienstleistungsunternehmen,
- Übertragen der eingegebenen Daten zu einem von dem Vermittlerterminal (3, 4) und den Terminals (2) unabhängigen Portal (1), und
- Übertragen der Daten von dem Portal (1) zu einer Format-Konverteranwendung zur Darstellung der Daten auf dem Vermittlerterminal (3, 4) in einem standardisierten Format.

4. Verfahren nach Anspruch 3,
**dadurch gekennzeichnet,**
**daß** die Daten automatisch von der Konverteranwendung (18) in eine Vermittler-Verwaltungsprogramm (16) eingetragen werden.

5. Verfahren nach Anspruch 3 oder 4,
**dadurch gekennzeichnet,**
**dass** die Daten von dem Verwaltungsprogramm des Terminals (2) in einem standardisierten Format (14) zu dem Portal (1) übertragen werden.

6. Verfahren nach einem der vorhergehenden Ansprüche,
**dadurch gekennzeichnet,**
**dass** auf dem Vermittlerterminal (3, 4) ein Verwaltungsprogramm (16) installiert ist.

7. Verfahren nach einem der vorhergehenden Ansprüche,
dass auf dem Portal (1) ein Verwaltungsprogramm (18) installiert ist, auf das das Vermittlerterminal (3, 4) mittels des Datennetzes (10) zugreifen kann.

8. Verfahren nach einem der vorhergehenden Ansprüche,
**dadurch gekennzeichnet,**
**dass** bei einer Datenübertragung zwischen einem Vermittlerterminal (3, 4) und einem Terminal (2) für den Fall, dass zu den Daten beim Übertragungsadressaten bereits ein älterer Datensatz vorliegt, nur geänderte Datensätze übertragen und beim Übertragungsadressaten eingeschrieben werden.

9. Verfahren nach einem der vorhergehenden Ansprüche,
**dadurch gekennzeichnet,**
**dass** an einem der Terminals (2, 3, 4) eingegebene Daten jeweils durch das Portal (1) in ein standardisiertes Format (7, 14) und von diesem wiederum in ein dem jeweiligen Ausgabeterminal (2, 3, 4) angepaßtes Format umgesetzt werden.

10. Verfahren nach einem der vorhergehenden Ansprüche,
**dadurch gekennzeichnet,**
**dass** die Finanzdienstleistungs-Unternehmen Versicherungsgesellschaften sind.

11. Verfahren nach Anspruch 10,
**dadurch gekennzeichnet,**
**dass** von wenigstens einem Terminal (2) zu wenigstens einem Vermittlerterminal (3, 4) über das Datennetz (10) und das Portal (1) versicherungsrelevante Informationen übertragen werden.

12. Software-Programm,
**dadurch gekennzeichnet,**
**dass** es in dem in einen Speicher eines Terminals (2) eines Finanzdienstleistungs-Unternehmens, eines Datennetz-Portals (1) und/oder eines Vermittlerterminals (3, 4) geladenen oder implementierten Zustand die Ausführung eines Verfahrens nach einem der vorhergehenden Ansprüche ermöglicht.

13. Software-Programm nach Anspruch 12,
**dadurch gekennzeichnet,**
**dass** es ein auf einem Vermittlerterminal installiertes Vermittler-Verwaltungsprogramm (16) oder Konverterprogramm ist.

14. Software-Programm nach Anspruch 12,
**dadurch gekennzeichnet,**
**dass** es ein auf einem Datennetz-Portal (1) installiertes Vermittler-Verwaltungsprogramm (17) ist.

15. System zur elektronischen Datenübermittlung zwischen einem Vermittlerterminal (3, 4) und Terminals (2) mehrerer Finanzdienstleistungs-Unternehmen über ein Datennetz (10), wobei das System aufweist:
- wenigstens ein Vermittlerterminal (3, 4) zur Ein- und Ausgabe von Daten, die für eine Finanzdienstleistung relevant sind, durch einen Vermittler, der Finanzdienstleistungen verschiedener Finanzdienstleistungs-Unternehmen vermittelt,
- mehrere, jeweils einem der Finanzdienstleistungs-Unternehmen zugeordnete Terminals (2) zur Ein- und Ausgabe von Daten, die für eine Finanzdienstleistung relevant sind, durch einen Benutzer des jeweiligen Finanzdienstleistungs-Unternehmens, und
- ein Portal (1) zur Übermittlung der Daten zwischen dem wenigstens einen Vermittlerterminal (3, 4) und den Terminals (2) unter Anpassung des jeweiligen Eingabeformats an das jeweilige Ausgabeformat, wobei die Datenübermittlung über ein Datennetz (10) erfolgt.

16. System nach Anspruch 15,
**dadurch gekennzeichnet,**
**dass** das Vermittlerterminal (3) eine Konverteranwendung (18) aufweist, die in das Verwaltungsprogramm des Vermittlerterminals eingegebene Daten ausliest und in einem standardisierten Format an das Portal übermittelt.

17. System nach einem der Ansprüche 15 oder 16,
**dadurch gekennzeichnet,**
**dass** auf dem Vermittlerterminal (3) ein Verwaltungsprogramm (16) installiert ist.

18. System nach einem der Ansprüche 15 oder 16,
dass auf dem Portal (1) ein Verwaltungsprogramm (17) installiert ist, auf das das Vermittlerterminal (3) mittels eines Datennetzes (10) zugreifen kann.

19. System nach einem der Ansprüche 15 bis 18,
**dadurch gekennzeichnet,**
**dass** die übertragenen Daten für die Anbahnung, Vermitttlung und/oder die Erbringung der Finanzdienstleistung relevant sind.

20. System nach einem der Ansprüche 15 bis 19,
**dadurch gekennzeichnet,**
**dass** die Finanzdienstleistungs-Unternehmen Versicherungsgesellschaften sind.

21. System nach einem der Anspruch 20,
**dadurch gekennzeichnet,**
**dass** die versicherungsrelevanten Daten Antragsdaten, Bestandsdaten, Policedaten, Courtage-/Provisionsdaten und/oder Schadensdaten sind.

## Geänderte Patentansprüche

### Geänderte Patentansprüche gemäss Regel 86(2) EPÜ.

**1.** Verfahren zur elektronischen Datenübermittlung von wenigstens einem Vermittlerterminal (3, 4) zu einem von mehreren Terminals (2) von Finanzdienstleistungs-Unternehmen mittels eines Datennetzes (10), wobei die Vermittlerterminals (3, 4) jeweils Leistungen von verschiedenen Finanzdienstleistungs-Unternehmen gegenüber Endkunden vermitteln und das Verfahren die folgenden Schritte aufweist:
- Eingabe von Daten, die für eine Finanzdienstleistung relevant sind, die von einem bestimmten der Finanzdienstleistungs-Unternehmen gegenüber einem Endkunden erbracht wird, in das Vermittlerterminal (3, 4),
- Übertragen der eingegebenen Daten über das Datennetz (10) zu einem von dem Vermittlerterminal (3, 4) und dem Terminal (2) unabhängigen Portalserver (1), und
- Übertragen der eingegeben Daten über das Datennetz (10) von dem Portalserver (1) in das Verwaltungsprogramm des Terminals (2) unter Anpassung an das von dem Verwaltungsprogramm des Terminals (2) erforderliche Format.

**2.** Verfahren nach Anspruch 1,
**dadurch gekennzeichnet,**
**dass** in das Vermittlerterminal (3, 4) eingegebene Daten automatisch durch eine Konverteranwendung (18) ausgelesen und in einer standardisierten Form (7) zu dem Portalserver (1) übertragen werden.

**3.** Verfahren zur elektronischen Datenübermittlung von einem von mehreren Terminals (2) von Finanzdienstleistungs-Unternehmen zu wenigstens einem Vermittlerterminal (3, 4) mittels eines Datennetzes (10), wobei die Vermittlerterminals (3, 4) jeweils Leistungen von verschiedenen Finanzdienstleistungs-Unternehmen gegenüber Endkunden vermitteln und das Verfahren die folgenden Schritte aufweist:
- Eingabe von Daten, die für eine Finanzdienstleistung relevant sind, die von einem bestimmten der Finanzdienstleistungs-Unternehmen gegenüber einem Endkunden erbracht wird, in das Verwaltungsprogramm eines Terminals (2) des Finanzdienstleistungs-Unternehmen,
- Übertragen der eingegebenen Daten über das Datennetz (10) zu einem von dem Vermittlerterminal (3, 4) des Finanzdienstleistungs-Unternehmen und den Terminals (2) unabhängigen Portalserver (1), und
- Übertragen der Daten über das Datennetz (10) von dem Portalserver (1) zu einer Format-Konverteranwendung zur Darstellung der Daten auf dem Vermittlerterminal (3, 4) in einem standardisierten Format.

**4.** Verfahren nach Anspruch 3,
**dadurch gekennzeichnet,**
**dass** die Daten automatisch von der Konverteranwendung (18) in ein Vermittler-Verwaltungsprogramm (16) eingetragen werden.

**5.** Verfahren nach Anspruch 3 oder 4,
**dadurch gekennzeichnet,**
**dass** die Daten von dem Verwaltungsprogramm des Terminals (2) in einem standardisierten Format (14) zu dem Portalserver (1) übertragen werden.

**6.** Verfahren nach einem der vorhergehenden Ansprüche,
**dadurch gekennzeichnet,**
**dass** auf dem Vermittlerterminal (3, 4) ein Verwaltungsprogramm (16) installiert ist.

**7.** Verfahren nach einem der vorhergehenden Ansprüche,
dass auf dem Portalserver (1) ein Verwaltungsprogramm (18) installiert ist, auf das das Vermittlerterminal (3, 4) mittels des Datennetzes (10) zugreifen kann.

**8.** Verfahren nach einem der vorhergehenden Ansprüche,
**dadurch gekennzeichnet,**
**dass** bei einer Datenübertragung zwischen einem Vermittlerterminal (3, 4) und einem Terminal (2) für den Fall, dass zu den Daten beim Übertragungsadressaten bereits ein älterer Datensatz vorliegt, nur geänderte Datensätze übertragen und beim Übertragungsadressaten eingeschrieben werden.

**9.** Verfahren nach einem der vorhergehenden Ansprüche,
**dadurch gekennzeichnet,**
**dass** an einem der Terminals (2, 3, 4) eingegebene Daten jeweils durch den Portalserver (1) in ein standardisiertes Format (7, 14) und von diesem wiederum in ein dem jeweiligen Ausgabeterminal (2, 3, 4) angepasstes Format umgesetzt werden.

**10.** Verfahren nach einem der vorhergehenden Ansprüche,
**dadurch gekennzeichnet,**
**dass** die Finanzdienstleistungs-Unternehmen Versicherungsgesellschaften sind.

**11.** Verfahren nach Anspruch 10,
**dadurch gekennzeichnet,**
**dass** von wenigstens einem Terminal (2) zu wenigstens einem Vermittlerterminal (3, 4) über das Datennetz (10) und den Portalserver (1) versicherungsrelevante Informationen übertragen werden.

**12.** Software-Programm,
**dadurch gekennzeichnet,**
**dass** es in dem in einen Speicher eines Terminals (2) eines Finanzdienstleistungs-Unternehmens, eines Datennetz-Portalservers (1) und/oder eines Vermittlerterminals (3, 4) geladenen oder implementierten Zustand die Ausführung eines Verfahrens nach einem der vorhergehenden Ansprüche ermöglicht.

**13.** Software-Programm nach Anspruch 12,
**dadurch gekennzeichnet,**
**dass** es ein auf einem Vermittlerterminal installiertes Vermittler-Verwaltungsprogramm (16) oder Konverterprogramm ist.

**14.** Software-Programm nach Anspruch 12,
**dadurch gekennzeichnet,**
**dass** es ein auf einem Datennetz-Portalserver (1) installiertes Vermittler-Verwaltungsprogramm (17) ist.

**15.** System zur elektronischen Datenübermittlung zwischen einem Vermittlerterminal (3, 4) und Terminals (2) mehrerer Finanzdienstleistungs-Unternehmen über ein Datennetz (10),
wobei das System aufweist:
- wenigstens ein Vermittlerterminal (3, 4) zur Ein- und Ausgabe von Daten, die für eine Finanzdienstleistung relevant sind, die von einem bestimmten der Finanzdienstleistungs-Unternehmen gegenüber einem Endkunden erbracht wird, durch einen Vermittler, der Finanzdienstleistungen verschiedener Finanzdienstleistungs-Unternehmen vermittelt,
- mehrere, jeweils einem der Finanzdienstleistungs-Unternehmen zugeordnete Terminals (2) zur Ein- und Ausgabe von Daten, die für eine Finanzdienstleistung relevant sind, durch einen Benutzer des jeweiligen Finanzdienstleistungs-Unternehmens, und
- einen Portalserver (1) zur Übermittlung der Daten zwischen dem wenigstens einen Vermittlerterminal (3, 4) und den Terminals (2) unter Anpassung des jeweiligen Eingabeformats an das jeweilige Ausgabeformat, wobei die Datenübermittlung über das Datennetz (10) erfolgt.

**16.** System nach Anspruch 15,
**dadurch gekennzeichnet,**
**dass** das Vermittlerterminal (3) eine Konverteranwendung (18) aufweist, die in das Verwaltungsprogramm des Vermittlerterminals eingegebene Daten ausliest und in einem standardisierten Format an den Portalserver übermittelt.

**17.** System nach einem der Ansprüche 15 oder 16,
**dadurch gekennzeichnet,**
**dass** auf dem Vermittlerterminal (3) ein Verwaltungsprogramm (16) installiert ist.

**18.** System nach einem der Ansprüche 15 oder 16,
dass auf dem Portalserver (1) ein Verwaltungsprogramm (17) installiert ist, auf das das Vermittlerterminal (3) mittels eines Datennetzes (10) zugreifen kann.

**19.** System nach einem der Ansprüche 15 bis 18,
**dadurch gekennzeichnet,**
**dass** die übertragenen Daten für die Anbahnung, Vermitttlung und/oder die Erbringung der Finanzdienstleistung relevant sind.

**20.** System nach einem der Ansprüche 15 bis 19,
**dadurch gekennzeichnet,**
**dass** die Finanzdienstleistungs-Unternehmen Versicherungsgesellschaften sind.

**21.** System nach einem der Anspruch 20,
**dadurch gekennzeichnet,**
**dass** die versicherungsrelevanten Daten Antragsdaten, Bestandsdaten, Policedaten, Courtage-/Provisionsdaten und/oder Schadensdaten sind.
